# EUROPÄISCHE PATENTSCHRIFT

(11) **EP 1 387 460 B1**
(45) Veröffentlichungstag und Bekanntmachung des Hinweises auf die Patenterteilung: **12.09.2007**
(21) Anmeldenummer: 03015724.2
(22) Anmeldetag: 10.07.2003
(51) Int. Cl.: H02J 3/14

(54) **Energieversorgungsanordnung für eine Bordküche eines Verkehrsmittels, insbesondere eines Flugzeuges**
Power supply arrangement for the galley of a vehicle, in particular for an aircraft
Dispositif d'alimentation éléctrique pour une cuisine de bord d'un moyen de transport, en particulier d'un aéronef

(30) Priorität: 02.08.2002 DE 10235600
(43) Veröffentlichungstag der Anmeldung: 04.02.2004
(73) Patentinhaber: Airbus Deutschland GmbH, 21129 Hamburg (DE)
(72) Erfinder: Glahn, Wolfgang, 22761 Hamburg (DE); Düser, Gerd, 21635 Jork (DE); König, Axel, 22547 Hamburg (DE); Finck, Mathias, 21129 Hamburg (DE); Reitmann Jörg, 21698 Harsefeld (DE)
(74) Vertreter: Hansmann, Dierk

(56) Entgegenhaltungen:
- DE-A1- 19 502 786
- DE-A1- 19 817 191
- GB-A- 1 550 677
- US-A- 5 414 640
- US-A- 5 927 598

## Beschreibung

Die Erfindung betrifft ein Verfahren zur Energieversorgung einer Bordküche eines Verkehrsflugzeuges

Üblicherweise ist in derzeitigen Verkehrsflugzeugen für die Bordküchen ein Energieversorgungsnetz vorgesehen, das aus einem Leitungsbaum besteht und so ausgelegt ist, dass sämtliche elektrische Verbraucher einer Bordküche zu jeder Zeit unter Volllast betrieben werden können. Daraus folgt, dass die Summe der installierten Leistung der Stromverbraucher einer Bordküche immer kleiner der Anschlussleistung der jeweiligen Bordküchen-Stromversorgung sein muss, obwohl eine tatsächliche gleichzeitige Belastung aller angeschlossenen Verbraucher nur in Ausnahmefällen auftreten kann.

Insbesondere für zukünftige Anwendungsfälle, bei denen die Anzahl der installierten Lasten zunehmen wird, kann mit einem derartigen Energieversorgungsnetzwerk nicht mehr sichergestellt werden, dass alle elektrischen Geräte mit der an Bord eines Flugzeuges vorhandenen, begrenzten Energie versorgt werden. In derartigen Fällen werden beispielsweise mechanisch betätigbare Wechselschalter, die eine "Oder-Verknüpfung" von zwei Geräten vornehmen, eingesetzt oder es werden zusätzliche Stromverteilleitungen notwendig, die zur Erhöhung des Flugzeuggewichts führen und in den räumlich begrenzten Versorgungsschächten zu Engpässen führen können.

Aus DE 195 07 039 A1 bzw. US 5,637,933 ist ein Energieversorgungssystem bekannt, welches einen Energiebus aufweist und am Energiebus über Verbinderanordnungen elektrische Verbraucher angeschlossen sind. Darüber hinaus ist eine Kontrolleinheit vorgesehen, die die Verbraucher ständig überwacht und bei Fehlfunktionen entsprechend reagieren kann. Bei Fehlfunktionen oder einem zu großen Energieverbrauch kann die Kontrolleinheit den Verbraucher mit der geringsten Versorgungspriorität abschalten. Die Verbraucher sind dafür je mit einem Konfigurationscodegeber ausgerüstet, der beispielsweise eine Information über die Art des Verbrauchers sowie seine Priorität bei der Energieversorgung beinhaltet. Falls es bei einem Fehler in der Energiequelle zu einer Abnahme der erhältlichen Leistung kommt, wird durch ein Signal der Kontrolleinheit an den entsprechenden Leistungsschalter der Verbraucher mit der geringsten Priorität abgeschaltet und damit die gesamte Leistung des elektrischen Systems reduziert.

DE 198 17 191 A1 beschreibt ein Verfahren zum Regeln der Gesamtleistung einer Gruppe von elektrischen Verbrauchern. Eine Grundstation ermittelt eine aktuelle Gesamtleistung der Verbraucher und in Abhängigkeit davon eine Prioritätenliste, die eine Grenze zwischen Verbrauchern definiert, die in den Lastabwurf zu bringen oder frei zu schalten sind, und Verbrauchern, die im Normalbetrieb zu betreiben sind. Bei dem vorliegenden Powermanagement wird ein dynamisches Prioritätsmanagement integriert, welches die Ansteuerung in Abhängigkeit des aktuellen Betriebszustandes der Verbraucher auswählt. Die aktuelle Schaltleistung der Verbraucher wird in einer Tabelle abgespeichert, um eine neue Prioritätsliste zu erstellen, die dem augenblicklichen Strombedarf Rechnung trägt. Zustandsberichte der einzelnen Verbraucher werden hingegen nicht zur Verfügung gestellt bzw. können nicht abgerufen werden.

Aus DE 195 02 786 A1 ist ein Verfahren zur gezielten Spannungsversorgung von elektrischen Geräten bekannt. Ein Abrufen und Ablegen von Zustandsberichten über diese Geräte ist nicht offenbart.

US 5,927,598 offenbart ein Powermanagement für Serviceeinrichtungen, jedoch ist keine integrierte Zustandeberichterstellung/-auswertung zu entnehmen. Hier steuert ein Kontroller lediglich sequentiell und in einer vorbestimmten Weise die Zustände aller Geräte.

Der vorliegenden Erfindung liegt somit die Aufgabe zugrunde, ein gattungsgemä-ßes Verfahren zur Energieversorgung für eine Flugzeugküche derart auszubilden, dass ein Abschalten von elektrischen Verbrauchern nicht mehr notwendig ist und sich damit der Bedienungskomfort der Küchengeräte an Bord eines Flugzeuges verbessert, wobei ein notwendiges Energieverteilnetz gewichtssparend ausgebildet sein soll sowie Zustandsberichte von einzelnen Verbrauchern jederzeit abrufbar sind.

Diese Aufgabe wird durch die im Patentanspruch 1 genannten Maßnahmen gelöst.

Dabei ist insbesondere vorteilhaft, dass mit der Anwendung der Erfindung ein "intelligentes" Verteilen der zur Verfügung stehenden Stromressourcen ermöglicht wird und damit der Nutzer einer Flugzeugküche optimal arbeiten kann. Es ist nicht notwendig, bestimmte Geräte abzuschalten und damit den Cateringablauf zu unterbrechen oder zu behindern. Eine vorübergehende Leistungsreduzierung wird vom entsprechenden Nutzer möglicherweise gar nicht wahrgenommen oder als unproblematisch eingestuft.
Darüber hinaus sind Zustandsberichte von einzelnen Verbrauchern verfügbar, damit Fehlfunktionen besser erkannt oder Wartungsdienste besser durchgeführt werden können.

Weiterbildungen und vorteilhafte Ausgestaltungen sind in den Ansprüchen 2 bis 10 angegeben. Weitere Vorteile ergeben sich aus der nachfolgenden Detailbeschreibung.

In der Zeichnung sind Ausführungsbeispiele der Erfindung dargestellt, welche nachstehend anhand der Figuren 1 bis 5 näher beschrieben werden. In den Figuren sind gleiche Bauteile mit gleichen Bezugszeichen versehen.

Es zeigen im einzelnen:
- Fig. 1: eine schematische Darstellung einer Energieversorgungsanordnung in Form eines Blockschaltbildes,
- Fig. 2: ein Versorgungskreis für elektrische Verbraucher einer Bordküche in einem Verkehrsflugzeug,
- Fig. 3: einen Verfahrensablauf einer Energieverteilung in einer ersten Ausführungsform,
- Fig. 4: einen Verfahrensablauf einer Energieverteilung in einer zweiten Ausführungsform und
- Fig. 5: einen Verfahrensablauf einer Energieverteilung in einer dritten Ausführungsform.

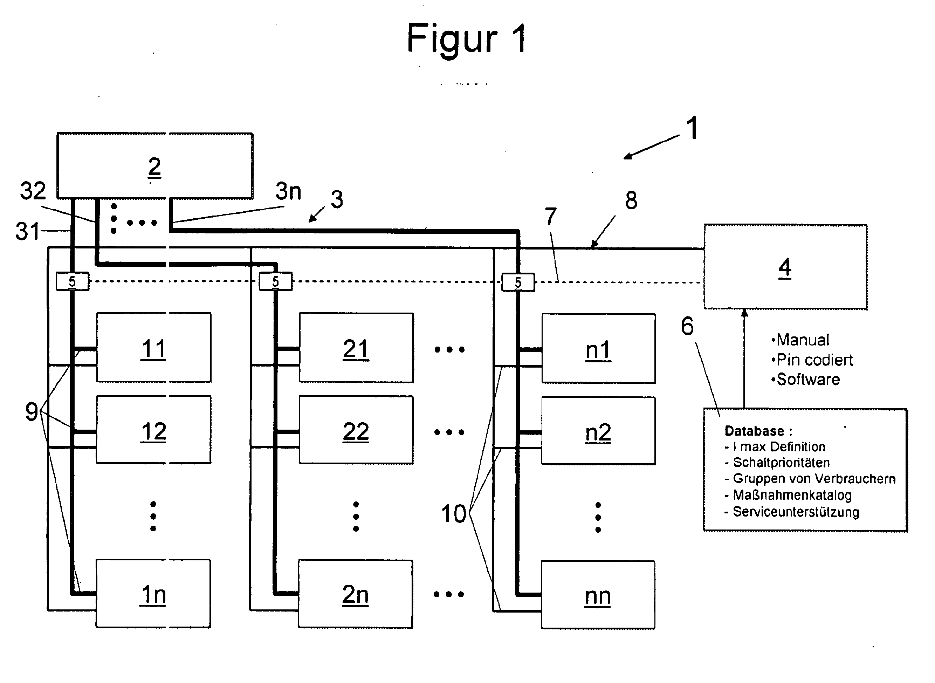

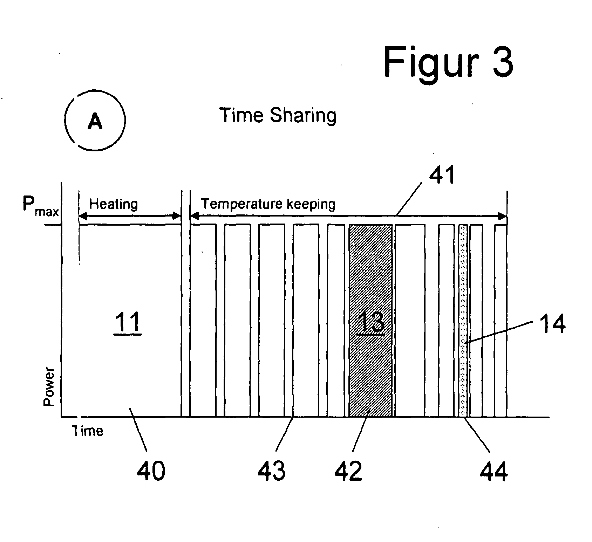

In der Fig. 1 ist eine Energieversorgungsanordnung 1 für elektrische Verbraucher 11 ... 1n, 21 ... 2n und n1 ... nn einer Flugzeugküche in einer schematischen Übersichtsdarstellung gezeigt. Die in einem Flugzeug für die Bordküchen zur Verfügung stehende Energie ist üblicherweise begrenzt und wird von einer Stromquelle 2 zur Verfügung gestellt. Über ein Verteilernetz 3 wird den über Anschlussleitungen 9 innerhalb eines Versorgungskreises 31, 32 oder 3n angeschlossenen Verbrauchern 11 ... 1n, 21 ... 2n und n1 ... nn der benötigte Strom zur Verfügung gestellt. Eine Steuereinheit 4 ist für die Versorgung von mindestens einem Versorgungskreis 31, 32 oder 3n bzw. vorzugsweise für alle Versorgungskreise einer Bordküche vorgesehen, um den aktuellen Stromverbrauch der angeschlossenen Geräte (Verbraucher 11 ... 1n, 21 ... 2n und n1 ... nn) auszuwerten und sicherzustellen, dass ein maximaler Stromverbrauch der angeschlossenen Verbraucher (Iₘₐₓ ) nicht überschritten wird. Die Messung des aktuellen Stromwertes l_{actual} erfolgt in einer Messeinheit 5 direkt innerhalb des Stromverteilernetzes 3, vorzugsweise innerhalb eines Versorgungskreises 31, 32 bzw. 3n, oder direkt am Verbraucher im Additionsverfahren. Über eine Datenleitung 7 wird der gemessene Wert an die Steuereinheit 4 übertragen. Die Datenleitung 7 kann auch Bestandteil eines Datenbussystems 8 sein, welches eine Verbindung zu allen Verbrauchern 11 bis 1n, 21 bis 2n oder n1 bis nn herstellt. Innerhalb der Steuereinheit 4 wird die Differenz zwischen dem maximalen Stromwert Iₘₐₓ und dem aktuellen Stromwert I_{actual} ermittelt, wobei diese Differenzbildung in einem festlegbaren Taktzyklus erfolgt, beispielsweise alle 50ms Sekunden. Der maximale Wert (Iₘₐₓ) wird vorher festgelegt, wobei die Festlegung von der maximal möglichen zugeführten Versorgungsleistung abhängt. Der Wert wird in die Steuereinheit 4 beispielsweise manuell, per Software oder Pin codiert eingegeben. In Abhängigkeit von dem Ergebnis der regelmäßigen Differenzbildung wird in der Steuereinheit 4 eine entsprechende Reaktion ausgelöst. Solange der aktuelle Stromwert I_{actual} kleiner als der maximale Stromwert Iₘₐₓ ist, wird in die Stromverteilung nicht eingegriffen. Es können jedoch präventive Maßnahmen vorgesehen sein, um ein Erreichen des maximalen Stromwertes Iₘₐₓ zu verhindern.
Wenn der aktuelle Stromwert I_{actual} größer als der maximale Stromwert Iₘₐₓ wird, werden durch die Steuereinheit 4 reaktive Maßnahmen aktiviert, um den Stromwert I_{actual} wieder zu senken bis er kleiner als der maximale Stromwert Iₘₐₓ. ist. Die durchzuführenden Maßnahmen sind als Maßnahmenkatalog, vorzugsweise in Form eines Softwareprogramms, in einer Datenbank 6 gespeichert und können bei Bedarf von der Steuereinheit 4 abgerufen werden. In dem Maßnahmekatalog sind Schaltabläufe vorgesehen, die unter bestimmten Bedingungen abgearbeitet werden. So ist es beispielsweise möglich, eine stufenweise Leistungsreduzierung der einzelnen Verbraucher 11 bis 1n, 21 bis 2n oder n1 bis nn durchzuführen, bis man einen Wert unterhalb des maximalen Verbrauchswertes erreicht hat. Neben einer Leistungsreduzierung aller Verbraucher 11 bis 1n, 21 bis 2n oder n1 bis nn kann als alternative Möglichkeit eine Kopplung mit Schaltprioritäten der einzelnen Verbraucher 11 bis 1n, 21 bis 2n oder n1 bis nn erfolgen, d.h. eine stufenweise Leistungsreduzierung erfolgt nur bei Verbrauchern mit einer geringen Priorität. Mögliche Verfahrensabläufe einer Energieverteilung als Beispiele für die Maßnahmen eines Maßnahmekataloges sind den in den Figuren 3 bis 5 gezeigten Ausführungsformen zu entnehmen. Über den Datenbus 8 und über Datenverteilleitungen 10 ist die Steuereinheit 4 mit jedem Verbraucher 11 bis 1n, 21 bis 2n oder n1 bis nn verbunden. Es wird ein Signal von der Steuereinheit 4 an die Verbraucher 11 bis 1n, 21 bis 2n und n1 bis nn oder an mindestens einen speziellen - durch Abarbeitung des Maßnahmekatalogs - ausgewählten Verbraucher 11 bis 1n, 21 bis 2n oder n1 bis nn übermittelt und die Leistungsaufnahme des Verbrauchers 11 bis 1n, 21 bis 2n oder n1 bis nn wird reduziert. Jeder Verbraucher 11 bis 1n, 21 bis 2n oder n1 bis nn ist dafür mit einem Adressierungscode versehen, um über das Datenbussystem 8 ein gezieltes Ansprechen / einen gezielten Zugriff auf das entsprechende Gerät zu ermöglichen. Der angesprochene Verbraucher wird entweder stufenlos oder stufenweise eine Leistungsreduzierung durchführen. Die durchzuführenden Maßnahmen berücksichtigen vorteilhaft die im Flugzeugcatering üblichen Abläufe, um eine notwendig vorzunehmende Leistungsreduzierung für den Nutzer der Bordküche möglichst unbemerkt ablaufen zu lassen oder zumindest eine Leistungsreduzierung auf die Vorgänge in der Bordküche nicht beeinträchtigend wirkt. Aufgrund der laufenden Überwachung des aktuellen Stromverbrauchs l_{actual} wird - wenn der Stromverbrauch wieder gesunken ist - ein entsprechendes Ergebnissignal an die Verbraucher 11 bis 1n, 21 bis 2n und n1 bis nn bzw. an den speziell betroffenen Verbraucher übermittelt und der Leistungsbedarf dieses Verbrauchers 11 bis 1n, 21 bis 2n oder n1 bis nn kann wieder auf normales Niveau umschalten oder stufenweise zurückgeführt werden.
Mit einer derartigen Lösung ist es möglich, ein "intelligentes" Verteilen der zur Verfügung stehenden Stromressourcen zu ermöglichen und damit den Nutzer einer Flugzeugküche optimal zu unterstützen. Es ist nicht notwendig, bestimmte Geräte abzuschalten und damit den Cateringablauf zu unterbrechen oder zu behindern. Eine vorübergehende Leistungsreduzierung wird vom entsprechenden Nutzer möglicherweise gar nicht wahrgenommen oder als unproblematisch eingestuft. Eine Überbelastung in der Stromversorgung kann ausgeschlossen werden, was ein eventuelles Auslösen der Schutztrennschalter verhindert und damit auch behördlichen Sicherheitsanforderungen entsprochen wird. Eine zuverlässige Funktion der elektrischen Geräte einer Bordküche und damit eine optimale Unterstützung des Versorgungsablaufs mit Getränken und Mahlzeiten für die Flugzeugpassagiere ist erreicht.

Die Datenbank 6 kann neben den genannten Informationen wie Maßnahmenkatalog und Gerätepriorität auch weitere Daten speichern oder zur Verfügung stellen. So ist es möglich, durch den direkten Zugriff der Steuereinheit 4 auf den einzelnen Verbraucher 11 bis 1n, 21 bis 2n oder n1 bis nn einen Zustandsbericht über das Gerät direkt abzurufen und in der Datenbank 6 abzulegen. Derartige Informationen können in zentraler Form für einen Versorgungskreis 31, 32 oder 33 oder für eine gesamte Bordküche abgelegt werden. Die Verbraucher 21 bis 2n sind dafür ausgestattet, um Informationen über beispielsweise die Zustände ON, OFF, STANDBY sowie DEFEKT erfassen und weitergeben zu können. Damit kann beispielsweise die Betriebsdauer eines elektrischen Gerätes erfasst, protokolliert und in der Datenbank 6 gespeichert werden, was für Wartungszwecke der Geräte von Bedeutung ist. Auch können Fehlfunktionen von Geräten mit einer derartigen Erfassung besser erkannt, aufgenommen und nach der Überprüfung behoben werden.

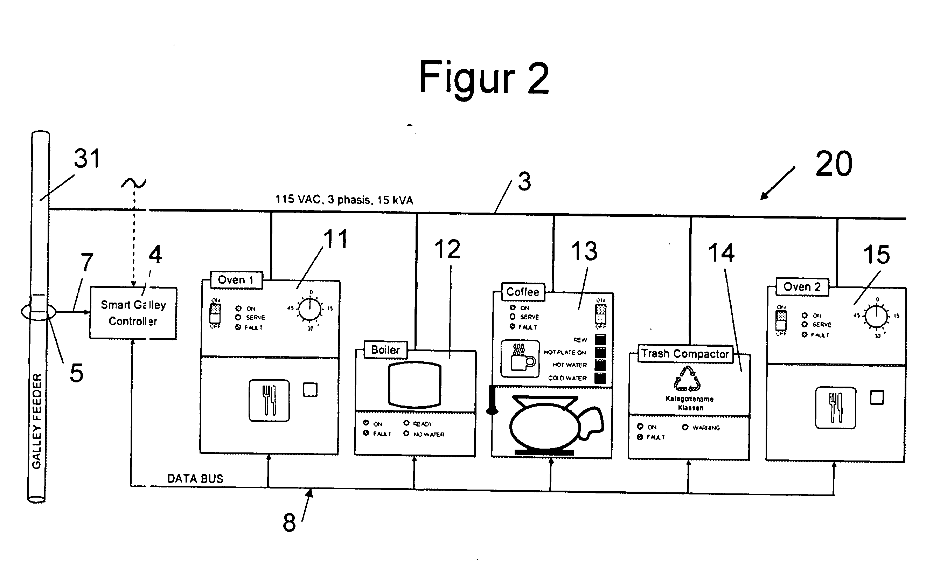

In Fig. 2 ist ein Tell einer Bordküche 20 eines Verkehrsflugzeuges dargestellt. Die zu versorgenden elektrischen Verbraucher sind hier als Ofen 11 und 15, als Wasserkocher 12, als Kaffee- bzw. Teemaschine 13 und als Müllpresse 14 dargestellt und werden über die Versorgungsleitung 3 mit Energie versorgt. Ausgehend von der Steuereinheit 4, einem sogenannten Smart Galley Controller, werden über das Datenbussystem 8 entsprechende Steuersignale an die elektrischen Verbraucher übermittelt. Es ist ersichtlich, dass die Verbraucher 11 bis 15 unterschiedlicher Art sein können und auch eine Leistungsaufnahme der einzelnen Verbraucher unterschiedlich ist.

Beispiele für Verfahrensabläufe einer Energieverteilung in verschiedenen Ausführungsformen als mögliche Maßnahmen entsprechend des Maßnahmekatalogs sind in den Figuren 3 bis 5 gezeigt. Die beschriebenen Maßnahmen werden angewendet, wenn der aktuelle Stromwert I_{actual} größer als der maximale Stromwert lₘₐₓ wird und durch die Steuereinheit 4 Maßnahmen aktiviert werden, um den Stromwert l_{actual} wieder zu senken bis er kleiner als der maximale Stromwert lₘₐₓ ist oder um ein Erreichen des maximalen Stromwertes lₘₐₓ mit Präventivmaßnahmen zu verhindern.

In Fig. 3 ist als eine Präventivmaßnahme in einem Energieverteilungs-ZeitDiagramm gezeigt, wobei durch ein zeitversetztes Einschalten von Verbrauchern eine bestimmte Leistungsaufnahme Pₘₐₓ nicht überschritten wird. Die Energieverteilung innerhalb eines Versorgungskreises einer Bordküche 20 zwischen Verbrauchern wie Ofen 11, Kaffeemaschine 13 und Müllpresse 14 ist in Abhängigkeit von der Zeit dargestellt. Über die Steuereinheit 4 wird geregelt, dass - auch wenn durch einen Nutzer der Bordküche 20 alle elektrischen Geräte gleichzeitig angeschaltet werden - zunächst der Ofen 11 die notwendige Energie zur Aufheizphase erhält. Die Aufheizphase ist mit dem Bezugszeichen 40 gekennzeichnet. Wenn die Betriebstemperatur erreicht ist, erfolgt üblicherweise eine Zwei-Punkt-Regelung 41, die den Ofen 11 auf Betriebstemperatur hält. In den Phasen, in denen das Aufheizen des Ofens 11 ausgesetzt wird, können Verbraucher mit geringerer Leistungsaufnahme bzw. kürzerer Betriebszeit, wie beispielsweise Kurzzeitverbraucher: die Kaffeemaschine 13 oder die Müllpresse 14 mit Energie versorgt werden. Die Steuereinheit 4 kann dazu zusätzliche Ausschaltphasen 42 oder 44 während der Zwei-Punkt-Regelung 41 erzeugen. Die Ein- und Ausschaltsignale für die Kaffeemaschine 13 oder die Müllpresse 14 werden durch die Steuereinheit 4 unter Berücksichtigung der Priorität des Verbrauchers und der Ausschaltphasen erzeugt und abgegeben. Innerhalb einer Ausschaltphase 42 während der Zwei-Punkt-Regelung 41 wird zunächst ein Verbraucher mit einer hohen Schaltpriorität, hier beispielsweise eine Kaffeemaschine 13, eingeschaltet. Die Ausschaltphase 42 läuft in dem gezeigten Ausführungsbeispiel entsprechend der notwendigen Betriebszeit der Kaffeemaschine 13 länger als die normalen Ausschaltphasen 43 während der Zwei-Punkt-Regelung 41; es wird hier in Kauf genommen, dass die Betriebstemperatur des Ofens 11 kurzzeitig leicht sinkt und das Aufheizen erst wieder startet, wenn der Prozess des Kaffeekochens beendet ist. Für das Betreiben der Müllpresse 14 wird die Ausschaltphase 44 genutzt, wobei dieser Zeitraum für den Schaltzyklus der Müllpresse 14 kurz ist und damit auch das Halten der Betriebstemperatur des Ofens 11 nicht beeinträchtigt wird. Die Steuerung dieser Maßnahmen wird automatisch durch einen Prozessor innerhalb der Steuereinheit 4 realisiert. Ein Nutzer der Bordküche 20, der die für einen Catering-Prozess notwendigen elektrischen Geräte zum gegebenen Zeitpunkt einschaltet, wird den Ablauf des Powermanagements nicht bemerken. So ist es beispielsweise möglich, dass zu Beginn des Catering-Prozesses mit einer zentralen Bedienung der Ofen 11 sowie die Kaffeemaschine 13 und/oder der Wasserkocher 12 gleichzeitig eingeschaltet werden und - ohne dass der Bediener noch einmal eingreift - ein automatischer Schaltablauf, wie beispielsweise in Figur 3 gezeigt, die Verteilung der Energie vornimmt.

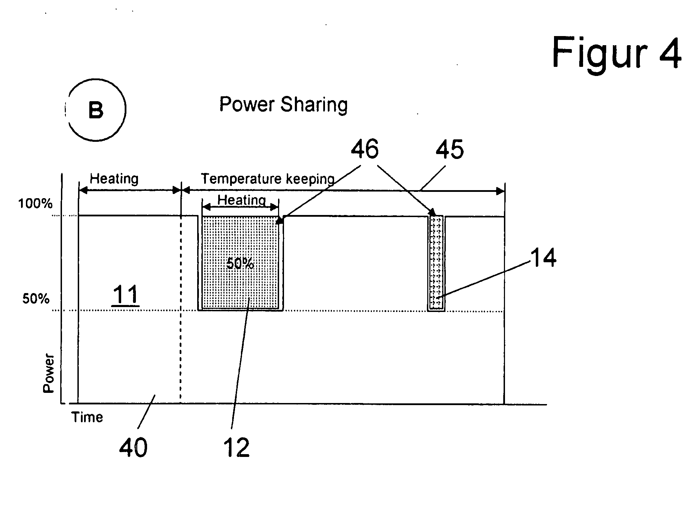

In Figur 4 ist ein weiteres Beispiel für einen Verfahrensablauf einer Energieverteilung gezeigt. Die Energieverteilung innerhalb eines Versorgungskreises einer Bordküche 20 zwischen Verbrauchern wie dem Ofen 11, dem Wasserkocher 12 und der Müllpresse 14 ist in Abhängigkeit von der Zeit dargestellt. Über die Steuereinheit 4 wird geregelt, dass zunächst der Ofen 11 die notwendige Energie zur Aufheizphase erhält. Die Aufheizphase ist mit dem Bezugszeichen 40 gekennzeichnet. Wenn die Betriebstemperatur erreicht ist, wird der Ofen 11 auf Betriebstemperatur gehalten (Haltephase 45). Die dafür notwendige Energie kann zumindest zeitweise reduziert werden. In dem gezeigten Beispiel ist zeitweise eine 50%ige Reduzierung der Energie vorgesehen und innerhalb dieser Reduzierungsphase 46 kann die Energie zum Betreiben eines anderen Kurzzeitverbrauchers genutzt werden, ohne dass ein maximaler Stromwert bzw. eine maximale Leistung überschritten wird. In den Phasen 46 der Stromreduzierung ist ein Verbraucher mit einer geringeren Leistungsaufnahme, wie beispielsweise der Wasserkocher 12 oder die Müllpresse 14 in entsprechender Ausgestaltung mit Energie versorgt. Wie bereits zu Figur 3 ausführlich beschrieben, erfolgt eine derartige Ablaufsteuerung automatisch mittels der Steuereinheit 4, ohne Eingriff eines Bedieners der Bordküche.

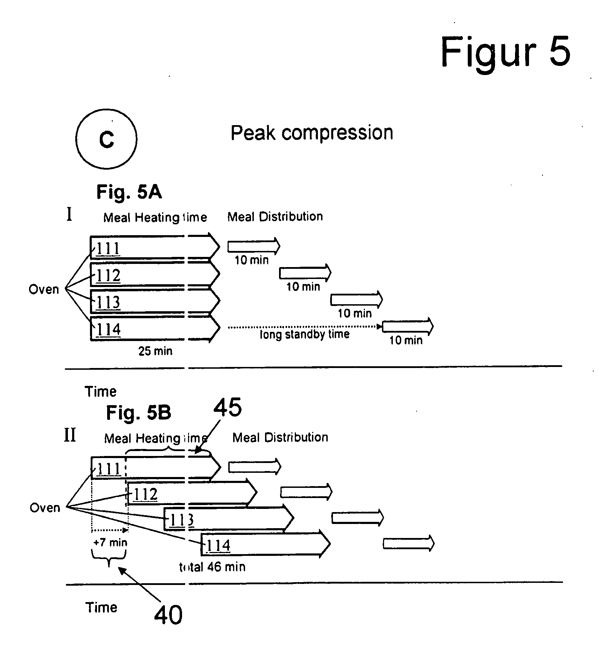

In Figur 5 ist in einer weiteren Ablaufdarstellung die Möglichkeit einer Vermeidung von Leistungsspitzen innerhalb eines Versorgungskreises einer Bordküche gezeigt. In Figur 5A ist der derzeitige Ablauf einer Ofenbenutzung dargestellt. Die Öfen 111 bis 114 werden gleichzeitig eingeschaltet und bei allen Verbrauchern liegt der Energiebedarf am Maximum. Die Erwärmung der Mahlzeiten wird üblicherweise in einem Zeitraum von 25 min durchgeführt, wobei ungefähr innerhalb der ersten 7 min die Aufheizphase 40 durchlaufen wird. Aufgrund der Verteilkapazität unter Nutzung eines Trolleys ist das Ausgeben der Mahlzeiten an die Passagiere jedoch nur in bestimmten Teilen möglich, d.h. die fertigen Mahlzeiten aus dem Ofen 111 werden verteilt und die fertigen Mahlzeiten aus den Öfen 112, 113 und 114 bleiben bis zur Verteilung in den Öfen und müssen in dieser Zeit weiter warmgehalten werden. In der Figur 5B ist ersichtlich, dass mittels der Steuereinheit 4 auch bei einem gleichzeitigen Einschalten der Öfen 111 bis 114 durch einen Bediener eine zeitversetzte Stromzuführung erfolgt und damit die Öfen zeitversetzt betrieben werden. Wenn der Ofen 111 die Aufheizphase durchläuft, ist noch kein weiterer Ofen in Betrieb und es ist nur die notwendige Leistung für das Betreiben dieses Ofens 111 zur Verfügung zu stellen. Wenn die Temperaturhaltephase 45 durchlaufen wird, kann die notwendige Leistung reduziert werden (siehe beispielsweise Reduzierungsphase 46 in Fig. 4) oder es erfolgt eine Zweipunktregelung 41 gemäß Figur 4. In diesem Zeitraum wird der zweite Ofen 112 angestellt, der nunmehr für die Aufheizphase eine volle Leistung benötigt. Durch das zeitversetzte Betreiben der Öfen werden Leistungsspitzen vermieden und der Verteilvorgang von Mahlzeiten wird in keiner Weise beeinträchtigt, da auch das zeitversetzte Verteilen der Mahlzeiten für die Bordversorgung der Passagiere üblich ist.

### Bezugszeichenliste

- 1 -: Energieversorgungsanordnung
- 2 -: Stromquelle
- 11 bis 1 n:
- 21 bis 2n:
- n1 bis nn -: Verbraucher/elektrische Geräte
- 3 -: Verteilernetz/Versorgungsleitungen
- 31, 32, 3n -: Versorgungskreise
- 4 -: Steuereinheit
- 5 -: Messeinheit
- 6 -: Datenbank
- 7 -: Datenleitung
- 8 -: Datenbussystem
- 9 -: Anschlussleitung
- 10 -: Datenverteilleitung

- 20 -: Bordküche
- 11 -: Ofen
- 111-114 -: Langzeitverbraucher, wie Öfen
- 12 -: Wasserkocher
- 13 -: Kaffeemaschine
- 14 -: Müllpresse
- 15 -: Ofen

- 40 -: Aufheizphase
- 41 -: Zwei-Punkt-Regelung
- 42 -: Ausschaltphase für Kaffeemaschine
- 43 -: übliche Ausschaltphase
- 44 -: Ausschaltphase für Müllpresse
- 45 -: Temperaturhaltephase
- 46 -: Reduzierungsphase

## Patentansprüche

1. Verfahren zu Energieversorgung einer Bordküche eines Verkehrsflugzeuges mit folgenden Verfahrensschritten:
Verbinden einzelner elektrischer Verbrauchter (11...1 n, 21...2n, n1...nn) mit einer Stromquelle (2) über ein Verteilnetz (3);
Verbinden der einzelnen Verbraucher (11...1n, 21 ...2n, n1 ... nn) mit einer Steuereinheit (4) über einen Datenbus (8) und Datenverteilleitungen (10);
Zuordnen eines Adressierungscodes zu jedem einzelnen Verbraucher (11 ... 1n, 21...2n, n1 ... nn) ;
Vergleichen des aktuellen Stromverbrauchs (I_{actual}) der Verbraucher (11 ... 1n, 21 ...2n, n1 ... nn) mit einem vorbestimmbaren maximalen Stromverbrauchswert (Iₘₐₓ) mittels der Steuereinheit (4);
Abrufen eines Maßnahmenkataloges und von Schaltprioritäten aus einer mit der Steuereinheit (4) verbundenen Datenbank (6) bei Erreichen des maximalen Stromverbrauchswertes (Iₘₐₓ);
Übermitteln von Steuersignalen an einzelne Verbraucher (11...1n, 21...2n, n1...nn) über den Datenbus, (8) und die Datenverteilleitungen (10) zum entweder An- oder Abschalten oder zum Reduzieren der Leistung entsprechender
Verbraucher in Abhängigkeit des abgerufenen Maßnahmenkataloges und der abgerufenen Schaltprioritäten;
Abrufen von Zustandsberichten der einzelnen Verbraucher (11...1n, 21 ...2n, n1...nn) mittels der Steuereinheit (4) über den Datenbus (8) und die Datenverteilleitungen (10); und
Ablegen der abgerufenen Zustandsberichte der einzelnen Verbraucher (11...1n, 21...2n, n1...nn) in der Datenbank (6).

2. Verfahren nach Anspruch 1, **dadurch gekennzeichnet, dass** aus dem Maßnahmenkatalog bereits vor Erreichen eines vorbestimmbaren maximalen Stromverbrauchswerts (Iₘₐₓ) präventive Maßnahmen ausgewählt und entsprechende Steuersignale an die Verbraucher (11 ... 1n, 21 ...2n, n1 ... nn) übermittelt werden.

3. Verfahren nach Anspruch 1 oder 2, **dadurch gekennzeichnet, dass** der aktuelle Stromverbrauch (I_{actual}) am jeweiligen Verbraucher (11 ... 1n, 21 ...2n, n1 ... nn) erfasst wird und die erfassten Stromverbrauche (I_{actual}) im Additionsverfahren in der Steuereinheit (4) zusammengefasst werden.

4. Verfahren nach einem der Anspruche 1 bis 3, **dadurch gekennzeichnet, dass** der Maßnahmenkatalog als eine Maßnahme einen Schaltablauf beinhaltet, bei dem Steuersignale eine stufenweise Reduzierung der Leistungsaufnahme aller Verbraucher (11 ... 1n, 21 ...2n, n1 ... nn) steuern.

5. Verfahren nach einem der Ansprüche 1 bis 4, **dadurch gekennzeichnet, dass** der Maßnahmenkatalog als eine weitere Maßnahme einen Schaltablauf beinhaltet, bei dem Steuersignale eine stufenweise Reduzierung der Leistungsaufnahme ausgewählter Verbraucher (21, ..., 2n) steuern, wobei die Auswahl anhand von den Verbrauchern zugeordneten Schaltprioritäten erfolgt.

6. Verfahren nach einem der Ansprüche 1 bis 5, **dadurch gekennzeichnet, dass** der Maßnahmenkatalog als eine Maßnahme einen Schaltablauf beinhaltet, bei dem Steuersignale ein zeitversetztes Betreiben ausgewählter Verbraucher (11 ... 1n, 21 ...2n, n1 ... nn) steuern.

7. Verfahren nach einem der Ansprüche 1 bis 6, **dadurch gekennzeichnet, dass** bei einem Erreichen eines aktuellen Stromverbrauchs (I_{actual}) unterhalb des maximalen Stromverbrauchs (Iₘₐₓ) durch entsprechende Steuersignale an den betroffenen Verbraucher (11 ... 1n, 21 ...2n, n1 ... nn) die Leistungsreduzierung aufgehoben wird.

8. Verfahren nach einem der Ansprüche 1 bis 7, **dadurch gekennzeichnet, dass** die mit dem Adressierungscode versehenen Verbraucher (11 ... 1n, 21 ...2n, n1 ... nn) über einen Informationsgeber Zustandsinformationen, wie ON, OFF, STANDBY, FEHLER an die Steuereinheit (5) übermitteln, die in dem in der Datenbank (6) abgelegten Zustandsbericht für den entsprechenden Verbraucher (11 ... 1 n, 21 ...2n, n1 ... nn) gespeichert werden.

9. Verfahren nach einem der Ansprüche 1 bis 8, **dadurch gekennzeichnet, dass** Langzeitverbraucher (11, 15), beispielsweise Öfen, während der Aufheizphase (40) mit voller Leistung betrieben werden und während der Temperaturhaltephase (41, 45) in den Ausschaltphasen (42, 44) oder Reduzierungsphasen (46) Kurzzeitverbraucher (12, 13, 14), beispielsweise Wasserkocher, Kaffeemaschine, Müllpresse, eingeschaltet werden.

10. Verfahren nach einem der Ansprüche 1 bis 8, **dadurch gekennzeichnet, dass** bei einer Anordnung von mehreren Langzeitverbrauchern (111, 112, 113, 114), beispielsweise Öfen, in einem Versorgungskreis (31, 32, 3n) auch bei gleichzeitigem Anschalten der Verbraucher die Aufheizphase (40) der Verbraucher (111, 112, 113, 114) zeitversetzt betrieben wird.

## Claims

1. Method for supplying power to a galley of a commercial aircraft, comprising the following method steps:
connecting individual electrical consumers (11...1n, 21...2n, n1...nn) to a current source (2) via a distribution network (3);
connecting the individual consumers (11...1n, 21...2n, n1...nn) to a control unit (4) via a data bus (8) and data distribution lines (10);
associating an address code with each individual consumer (11 ... 1n , 21...2n, n1 ... nn);
comparing the actual current consumption (l_{actual}) of the consumers (11 ... 1n, 21...2n, n1 ... nn) with a predeterminable maximum current consumption value (lₘₐₓ) by means of the control unit (4);
retrieving a catalogue of measures and switching priorities from a data base (6) connected to the control unit (4) when the maximum current consumption value (lₘₐₓ) is reached; transmitting control signals to individual consumers (11...1n, 21...2n, n1...nn) via the data bus (8) and the data distribution lines (10) for either switching on or switching off or for reducing the power of relevant consumers in accordance with the retrieved catalogue of measures and the retrieved switching priorities;
retrieving status reports for the individual consumers (11...1n, 21...2n, n1...nn) by means of the control unit (4) via the data bus (8) and the data distribution lines (10) ; and
storing the retrieved status reports for the individual consumers (11...1n, 21...2n, n1...nn) in the data base (6).

2. Method according to Claim 1, **characterised in that** preventive measures are selected from the catalogue of measures even before a predeterminable maximum current consumption value (lₘₐₓ) is reached and corresponding control signals are transmitted to the consumers (11...1n, 21...2n, n1...nn).

3. Method according to Claim 1 or 2, **characterised in that** the actual current consumption (l_{actual}) at the respective consumer (11...1n, 21...2n, n1...nn) is detected and the detected current consumptions (l_{actual}) are summed in an addition method in the control unit (4).

4. Method according to any one of Claims 1 to 3, **characterised in that** the catalogue of measures comprises as one measure a switching sequence in which control signals control a stepwise reduction of the power consumption of all the consumers (11...1n, 21...2n, n1...nn).

5. Method according to any one of Claims 1 to 4, **characterised in that** the catalogue of measures comprises as a further measure a switching sequence in which control signals control a stepwise reduction of the power consumption of selected consumers (21...2n), wherein the selection takes place on the basis of switching priorities associated with the consumers.

6. Method according to any one of Claims 1 to 5, **characterised in that** the catalogue of measures comprises as one measure a switching sequence in which control signals control a time-staggered operation of selected consumers (11...1n, 21...2n, n1...nn).

7. Method according to any one of Claims 1 to 6, **characterised in that** the power reduction is terminated through corresponding control signals to the consumer (11...1n, 21...2n, n1...nn) in question when an actual current consumption (l_{actual}) below the maximum current consumption (lₘₐₓ) is reached.

8. Method according to any one of Claims 1 to 7, **characterised in that** the consumers (11...1n, 21...2n, n1...nn) provided with the address code transmit via an information transmitter to the control unit (4) status information such as ON, OFF, STANDBY, FAULT which is stored in the status report for the corresponding consumer (11...1n, 21...2n, n1...nn) stored in the data base (6).

9. Method according to any one of Claims 1 to 8, **characterised in that** long-time consumers (11, 15), for example ovens, are operated at full power during the heating phase (40) and short-time consumers (12, 13, 14), for example water boilers, coffee machines, refuse compactors, are switched on during the temperature keeping phase (41, 45) in the power-off phases (42, 44) or reducing phases (46).

10. Method according to any one of Claims 1 to 8, **characterised in that**, in an arrangement of a plurality of long-time consumers (111, 112, 113, 114), for example ovens, in a supply circuit (31, 32, 3n), the heating phase (40) of the consumers (111, 112, 113, 114) is also operated in a time-staggered manner when the consumers are turned on at the same time.

## Revendications

1. Procédé d'alimentation électrique d'une cuisine de bord dans un aéronef, comprenant les étapes de procédé suivantes:
connexion de consommateurs électriques (11...1n, 21...2n, n1...nn) individuels à une source de courant électrique (2) par l'intermédiaire d'un réseau de distribution (3);
connexion des consommateurs (11...1n, 21...2n, n1...nn) individuels à une unité de commande (4) par l'intermédiaire d'un bus de données (8) et de lignes de transmission de données (10);
attribution d'un code d'adresse à chaque consommateur (11...1n, 21...2n, n1...nn) individuel;
comparaison de la consommation de courant actuelle (I_{actual}) des consommateurs (11...1n, 21...2n, n1...nn) avec une valeur de consommation de courant maximale (Iₘₐₓ) prédéterminée à l'aide de l'unité de commande (4);
appel d'un catalogue de mesures et de priorités de commutation appartenant à une banque de données (6) liée à l'unité de commande (4) lorsque la valeur de consommation de courant maximale (Iₘₐₓ) est atteinte;
envoi de signaux de commande à des consommateurs individuels (11 ... 1n, 21...2n, n1 ... nn) via le bus de données (8) et les lignes de transmission de données (10) afin de, soit mettre en marche ou arrêter le consommateur concerné, soit réduire sa puissance conformément au catalogue de mesures appelé et aux priorités de commutation appelées;
établisement de rapports d'état des consommateurs individuels (11 ... 1n, 21...2n, n1 ... nn) à l'aide de l'unité de commande (4) via le bus de données (8) et les lignes de transmission de données (10) et
enregistrement des rapports d'état des consommateurs individuels (11...1n, 21...2n, n1...nn) dans la banque de données (6).

2. Procédé selon la revendication 1, **caractérisé par le fait que** des mesures préventives sont sélectionnées dans le catalogue de mesures avant qu'une valeur de consommation de courant maximale (Iₘₐₓ) ne soit atteinte et que des signaux de commande correspondants sont transmis aux consommateurs (11...1n, 21...2n, n1 ... nn).

3. Procédé selon la revendication 1 ou 2, **caractérisé par le fait que** la consommation de courant actuelle (I_{actual}) est mesurée au niveau du consommateur individuel (11...1n, 21...2n, n1...nn) et que les consommations de courant (I_{actual}) mesurées sont ensuite cumulées par addition dans l'unité de commande (4).

4. Procédé selon une des revendications 1 à 3, **caractérisé par le fait que** le catalogue de mesures contient comme mesure un plan de commutation dans lequel les signaux de commande déclenchent une réduction progressive de la puissance consommée de tous les consommateurs (11...1 n, 21...2n, n1... nn).

5. Procédé selon une des revendications 1 à 4, **caractérisé par le fait que** le catalogue de mesures contient comme mesure supplémentaire un plan de commutation dans lequel les signaux de commande déclenchent une réduction progressive de la puissance consommée de consommateurs (21...2n) sélectionnés, la sélection ayant lieu sur la base de priorités de commutation associées aux consommateurs.

6. Procédé selon une des revendications 1 à 5, **caractérisé par le fait que** le catalogue de mesures contient comme mesure un plan de commutation dans lequel les signaux de commande déclenchent un fonctionnement décalé dans le temps de consommateurs (11...1n, 21...2n, n1...nn) séletionnés.

7. Procédé selon une des revendications 1 à 6, **caractérisé par le fait que** lorsqu'une consommation de courant actuelle (I_{actual}) inférieure à la consommation de courant maximale (Iₘₐₓ) est atteinte, la réduction de puissance des consommateurs (11 ... 1n, 21...2n, n1...nn) concernés est annulée par des signaux de commande adaptés.

8. Procédé selon une des revendications 1 à 7, **caractérisé par le fait que** les consommateurs (11 ... 1n, 21...2n, n1 ... nn) munis d'un code d'adresse transmettent par l'intermédiaire d'un transmetteur d'information des informations d'état telles que MARCHE, ARRET, ATTENTE, DEFAUT à l'unité de commande (5), qui sont mémorisées dans le rapport d'état pour le consommateur (11...1n, 21...2n, n1...nn) concerné.

9. Procédé selon une des revendications 1 à 8, **caractérisé par le fait que** les consommateurs (11, 15) de longue durée, par exemple les fours, fonctionnent à pleine puissance pendant la phase de préchauffage (40) et pendant la phase de maintien de la température (41, 45), dans les phases de coupure (42, 44) ou de réduction (46), les consommateurs de courte durée (12, 13, 14), par exemple les bouilloires, machines à café, presses à déchets, sont mis en service.

10. Procédé selon une des revendications 1 à 8, **caractérisé par le fait que** dans le cas d'un agencement avec plusieurs consommateurs (111, 112, 113, 114) de longue durée, par exemple des fours, dans un circuit d'alimentation (31, 32, 3n), même lorsque les consommateurs sont mis en service simultanément, la phase de préchauffage (40) des consommateurs (111, 112, 113, 114) est décalée dans le temps.
